# FASCICULE DE BREVET EUROPEEN

(11) **EP 3 017 498 B1**
(45) Date de publication et mention de la délivrance du brevet: **30.08.2017**
(21) Numéro de dépôt: 14747083.5
(22) Date de dépôt: 03.07.2014
(51) Int. Cl.: B60K 1/04, B60K 1/00, B60L 11/18, F28D 20/02, H01M 10/0525, H01M 10/613, H01M 10/625, H01M 10/65, H01M 10/659, H01M 10/6551, H01M 10/6562, H01M 2/10

(54) **DISPOSITIF DE GESTION THERMIQUE DE LA BATTERIE D'UN VEHICULE ELECTRIQUE**
THERMISCHE STEUERVORRICHTUNG DER BATTERIE EINES ELEKTROFAHRZEUGS
THERMAL CONTROL DEVICE OF THE BATTERY OF AN ELECTRIC VEHICLE

(30) Priorité: 05.07.2013 FR 1356629
(43) Date de publication de la demande: 11.05.2016
(73) Titulaire: Renault S.A.S., 92100 Boulogne-Billancourt (FR)
(72) Inventeur: CHOUFANY, Rany, F-75015 Paris (FR); KERETLI, Fahri, F-78320 Le Mesnil Saint Denis (FR); EL BAKKALI, Amin, F-78280 Guyancourt (FR); JOVET, Igor, F-91510 Lardy (FR)
(86) Numéro de dépôt international: PCT/FR2014/051713
(87) Numéro de publication internationale: WO 2015/001266

(56) Documents cités:
- WO-A2-01/61778
- WO-A2-2013/061132
- US-A1- 2006 073 377

## Description

La présente invention concerne un dispositif de gestion thermique d'une batterie d'accumulateurs électriques.

Un domaine d'application envisagé est notamment, mais non exclusivement, la gestion thermique des batteries lithium-ion, désormais largement utilisées pour le stockage de l'énergie électrique nécessaire à l'alimentation du moteur électrique des véhicules électriques et des véhicules hybrides. Ce type de batterie comporte une pluralité d'accumulateurs électriques, ou cellules, incluant un système électrochimique rechargeable destiné à fournir une tension nominale. Ces cellules peuvent être assemblées entre elles sous forme de modules incluant chacun une pluralité de cellules connectées en série ou en parallèle, les modules étant eux-mêmes interconnectés selon une configuration prédéterminés pour former la batterie. Une telle batterie est classiquement logée dans un carter de batterie constitué par une enveloppe rigide enfermant l'assemblage de cellules.

La technologie lithium-ion nécessite cependant de pouvoir maintenir la température de la batterie dans une plage de température optimale, comprise typiquement entre 20°C et 35°C, afin de préserver la durée de vie de la batterie. Un fonctionnement de la batterie en dehors de cette plage accélère en effet le vieillissement de la batterie et réduit sa capacité de stockage d'énergie.

L'augmentation de la température de la batterie peut être due soit à l'augmentation de la température ambiante, soit à la production de chaleur par la batterie elle-même, en raison de sa résistance interne. Ainsi, une batterie qui fournit 40 kW de puissance électrique produira aussi environ 2 kW de puissance thermique qu'il faudra évacuer.

Un dépassement de la limite maximale de température entraîne la limitation de la puissance demandée à la batterie afin de réduire la puissance thermique générée et ainsi ramener la température dans la plage admissible, c'est ce qu'on appelle le « derating » de la batterie, selon une terminologie anglo-saxonne. Plus la température ambiante et la puissance demandée à la batterie sont élevées, plus le risque de « derating » est important. A titre indicatif, le « derating » est appliqué quand la température de la batterie dépasse 48°C. On comprend aisément que le « derating » dégrade les performances de vitesse et d'accélération du véhicule, ce qui est mal perçu par le client.

Aussi, les batteries de traction des véhicules électriques et des véhicules hybrides disposent de moyens de régulation de leur température. De façon connue les batteries sont couramment refroidies par de l'air pulsé par des ventilateurs. Ainsi l'air externe à basse température est pulsé dans la batterie et s'évacue à travers les extracteurs, après avoir absorbé de la chaleur par convection. On comprend que ce dispositif de refroidissement atteint ses limites quand la température ambiante est élevée et/ou la puissance thermique générée par la batterie est importante. En effet, un écart faible de température entre l'air de refroidissement et la batterie signifie une faible capacité à évacuer la chaleur produite par la batterie.

Il est également connu d'utiliser un système de climatisation afin d'abaisser la température de l'air de refroidissement de la batterie. Dans ce cas l'air traverse d'abord un évaporateur d'un système de climatisation avant d'être pulsé dans la batterie.

Cependant, que la batterie soit refroidie par de l'air externe pulsé ou par de l'air réfrigéré, ces dispositifs entraînent une consommation d'énergie de par l'alimentation des actionneurs (ventilateur, compresseur du système de climatisation, etc.), ce qui réduit l'autonomie du véhicule. Dans le cas du refroidissement par réfrigération, un autre inconvénient du dispositif est le risque de dégradation du confort thermique dans l'habitacle du véhicule, puisqu'une partie des frigories produites par le système de climatisation est détournée de l'habitacle et dirigée vers la batterie. Il serait possible de remédier à ce deuxième inconvénient en implantant dans le véhicule un système de climatisation dédiée à la batterie mais ceci entrainerait un renchérissement du coût du véhicule.

On connaît par ailleurs du document de brevet US2006/0073377, qui sert de base pour la présentation en deux parties de la revendication 1, un dispositif de régulation de la température de la batterie comprenant un moyen de stockage thermique directement intégré à la batterie, qui utilise la chaleur latente de fusion d'un matériau à changement de phase (MCP) pour absorber au moins une partie de la chaleur générée par les cellules de la batterie. Selon ce document, les cellules de la batterie sont noyées au sein du matériau à changement de phase, qui est disposé à l'intérieur de l'enveloppe rigide enfermant la batterie, de sorte à remplir les espaces vides existant entre les cellules adjacentes. Ainsi, la chaleur générée par les cellules peut être stockée dans le matériau à changement de phase sous forme de chaleur latente pour effectuer le changement de phase du matériau. Le changement de phase du matériau entraîne une variation de sa densité et donc de son volume. Or, selon le document US2006/0073377, l'utilisation du matériau à changement de phase pour gérer la température de la batterie se fait dans un volume fixe, correspondant aux espaces vides entre les cellules de la batterie, alors que le matériau change de volume lorsqu'il change de phase, de manière soit à stocker de la chaleur (fusion du matériau), soit à libérer la chaleur préalablement stockée (solidification du matériau).

Un inconvénient du système de régulation de température de la batterie décrit dans le document US2006/0073377 est que, lors du refroidissement, le changement de phase implique une diminution du volume du matériau, entraînant un risque de perte des contacts thermiques entre le matériau et les cellules ou, à tout le moins, une diminution des surfaces d'échange thermique entre le matériau et les cellules, se traduisant par une dégradation des performances de régulation thermique. En outre, lors du réchauffage sous l'effet de la chaleur dégagée par les cellules, le matériau étant contraint dans un volume fixe, le changement de phase du matériau est affecté, entraînant un risque de surchauffe du matériau et/ou un risque d'endommagement de l'enveloppe rigide enfermant la batterie par surpression.

Dans ce contexte, la présente invention a pour but de proposer un dispositif de régulation thermique d'une batterie d'accumulateurs exempt de l'une au moins des limitations précédemment évoquées.

A cette fin, la présente invention propose un dispositif de gestion thermique d'une batterie d'accumulateurs électriques assemblés au sein d'une enveloppe rigide, ledit dispositif comprenant des moyens de stockage thermique intégrés à ladite batterie comprenant une enceinte contenant un matériau à changement de phase et présentant un volume d'échange thermique avec lesdits accumulateurs délimité par au moins une partie de ladite enveloppe, la fusion du matériau à changement de phase étant propre à stocker de la chaleur, et la solidification du matériau à changement de phase étant propre à libérer la chaleur préalablement stockée. Selon l'invention, ladite enceinte est munie à son extrémité distale d'un vase d'expansion apte à absorber les dilatations dudit matériau à changement de phase lors de son changement de phase.

Grâce à cet agencement, en phase solide, le matériau à changement de phase peut remplir intégralement le volume utile de l'enceinte de stockage thermique où s'effectuent les échanges thermiques, permettant ainsi une efficacité thermique optimale du système, tout en procurant à l'enceinte la capacité d'encaisser les variations de volume induites par la fusion du matériau à changement de phase permettant le stockage de la chaleur dégagée par les accumulateurs à température constante.

Selon d'autres caractéristiques avantageuses du dispositif de gestion thermique conforme à l'invention, prises isolément ou en combinaison :
- ledit vase d'expansion est surélevé par rapport à ladite enceinte et présente un volume interne prolongeant ledit volume d'échange thermique de ladite enceinte depuis une extrémité inférieure dudit vase d'expansion vers une extrémité supérieure fermée dudit vase d'expansion, opposée à ladite extrémité inférieure ;
- l'intérieur dudit vase d'expansion est en communication avec l'extérieur par l'intermédiaire d'une canalisation ouverte à l'air ambiant agencée dans une partie haute dudit vase d'expansion ;
- ladite canalisation ouverte à l'air ambiant est reliée à un conduit apte à surélever la mise à l'air ambiant ;
- ladite enceinte comprend une paroi supérieure en un matériau conducteur de la chaleur constituée par ladite au moins une partie de ladite enveloppe et formant une première surface d'échange thermique avec lesdits accumulateurs et une paroi inférieure en un matériau conducteur de la chaleur, disposée en regard de ladite paroi supérieure de sorte à fermer ledit volume d'échange thermique, ladite paroi inférieure formant une deuxième surface d'échange thermique avec l'extérieur de ladite batterie ;
- ladite enceinte comporte des ailettes d'échange thermique intégrées sur les surfaces desdites parois supérieure et inférieure de ladite enceinte ;
- un système de refroidissement actif est associé aux moyens de stockage thermique, comportant un circuit de refroidissement implanté dans ladite batterie, doté de moyens de circulation d'un fluide de refroidissement à travers ladite batterie ;
- des moyens de commande dudit système de refroidissement actif sont aptes à commander l'activation dudit système de refroidissement actif lorsque la température desdits accumulateurs atteint un premier seuil de température supérieur à la température de fusion dudit matériau à changement de phase et aptes à commander l'arrêt dudit système de refroidissement actif lorsque la température desdits accumulateurs atteint un deuxième seuil de température compris entre la température de fusion dudit matériau à changement de phase et ledit premier seuil.
- la température de fusion dudit matériau à changement de phase est sensiblement de l'ordre de 35°C.
- ledit matériau à changement de phase est de type paraffine.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est un schéma illustrant un mode de réalisation préféré du dispositif de gestion thermique d'une batterie conforme à la présente invention ;
- la Figure 2 est un schéma illustrant la variation des courbes de température des cellules de la batterie et du matériau à changement de phase en fonction du temps, dans un cas d'utilisation du véhicule ;
- la Figure 3 reprend le schéma de la figure 2 lorsque le véhicule n'est plus utilisé ;
- la Figure 4 est un schéma illustrant un mode de réalisation du dispositif de gestion thermique d'une batterie conforme à la présente invention, associant un système de refroidissement actif aux moyens de stockage thermique ;
- la Figure 5 un schéma illustrant la variation des courbes de température des cellules de la batterie et du matériau à changement de phase en fonction du temps, dans un cas d'utilisation du véhicule, en présence de moyens de refroidissement actif ;
- la Figure 6 est un organigramme illustrant un mode opératoire pour le pilotage des moyens de refroidissement actif.

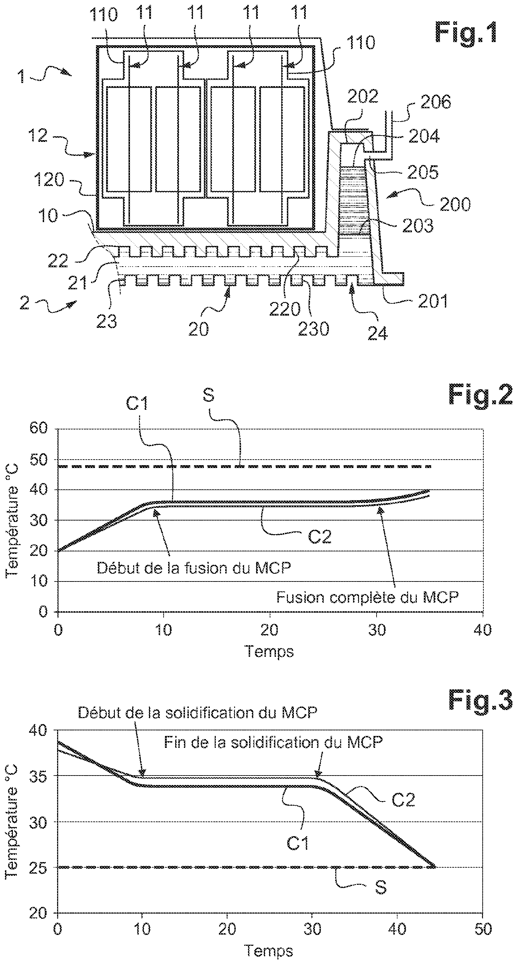

La figure 1 illustre une portion d'un pack de batterie doté d'un carter de batterie 10 constitué d'une enveloppe rigide, par exemple en alliage d'aluminium, destinée à renfermer une batterie 1 d'accumulateurs électriques 11, ou cellules, de type lithium-ion. Selon l'exemple de réalisation, les cellules 11 sont assemblées deux par deux par l'intermédiaire d'une carcasse métallique 110 apte à assurer le maintien mécanique des cellules et leur conduction thermique et quatre cellules 11 ainsi assemblées forment un module 12, dont l'enveloppe métallique 120 est en contact thermique d'une part, avec le carter de batterie 10 et, d'autre part, avec la carcasse métallique 110 des assemblages de cellules 11. De tels modules, dont un seul est représenté sur la figure 1, sont assemblés pour former le pack de batterie.

Conformément à l'invention, des moyens de stockage thermique 2 utilisant la chaleur latente de fusion d'un matériau à changement de phase sont directement intégrés à la batterie. Les moyens de stockage thermique 2 comprennent une enceinte 20, réalisée en un matériau métallique ayant un bon coefficient de conduction, ladite enceinte 20 contenant un matériau 21 à changement de phase (MCP). Le matériau 21 à changement de phase est par exemple une paraffine présentant une température de fusion propre à maintenir la température de batterie dans sa plage de température optimale. Aussi, on choisira préférentiellement une paraffine dont la température de fusion est sensiblement de 35°C. L'enceinte 20 pour le stockage du matériau 21 à changement de phase est agencée par rapport à la batterie de manière à permettre d'optimiser l'échange thermique entre les cellules 11, le matériau 21 à changement de phase et l'extérieur de la batterie, tout en gardant une architecture la plus compacte et la plus simple possible.

Pour ce faire, l'enceinte 20 est assemblée avec la batterie 1 de sorte à recouvrir une face inférieure de la batterie 1, en étant ainsi en contact thermique avec l'enveloppe métallique 120 des modules 12 via l'enveloppe métallique du carter de batterie 10 et partant, avec la carcasse métallique des assemblages de cellules 11. Plus précisément, l'enceinte 20 comprend une paroi 22, dite paroi supérieure, formant une surface d'échange thermique côté cellules 11 de la batterie 1, constituée par le carter de batterie 10 lui-même, qui sert donc d'enveloppe à la fois pour la batterie 1 et pour le matériau 21 à changement de phase. Le carter de batterie 10 assure donc une conduction thermique directe entre les modules 12, et donc les cellules 11 de la batterie 1, et le matériau 21 à changement de phase contenu dans l'enceinte 20. L'enceinte 20 comprend également une paroi 23 en matériau métallique, dite paroi inférieure, en regard de la paroi supérieure 22, formant une surface d'échange thermique côté extérieur et qui ferme le volume d'échange thermique de l'enceinte 20 englobant le matériau 21 à changement de phase.

Des ailettes d'échange thermique 220, 230 préférentiellement de forme parallélépipédique, sont intégrées sur les surfaces respectives des parois supérieure 22 et inférieure 23 de l'enceinte 20, et contribuent à augmenter la surface d'échange thermique entre les accumulateurs 11 de la batterie 1 et le matériau 21 à changement de phase, d'une part et entre le matériau 21 à changement de phase et l'air ambiant, d'autre part et ainsi, permettent d'augmenter la conductivité thermique du système. Ces ailettes 220, 230 s'étendent préférentiellement transversalement par rapport à la direction longitudinale de l'enceinte 20 recouvrant la face inférieure de la batterie 1.

Les moyens de stockage 20 utilisent donc la chaleur latente de fusion du matériau 21 à changement de phase pour stocker l'énergie thermique générée par la batterie. A titre d'exemple, soit un véhicule consommant une puissance de l'ordre de 20 kW à 100 km/h. La puissance thermique générée par la batterie pendant qu'elle fournit 20 kW est de l'ordre de 500 W. Cette puissance thermique représente une énergie thermique à évacuer de 250 Wh pour un roulage de 1/2 heure, donc pour parcourir 50 km. Cette énergie thermique équivaut à la capacité de stockage par chaleur latente de 5 kg de paraffine. Autrement dit, dans ce cas, la fusion de la paraffine suffirait à absorber la chaleur produite par la batterie. On a vu que le changement de phase du matériau entraîne une variation de sa densité et donc de son volume. En l'occurrence, la densité de la paraffine en phase liquide étant de 0,76 kg/l, le volume correspondant à 5 kg de paraffine en phase liquide est de 7 litres. Une fois solidifiée, elle occupera un volume de 6 litres (densité 0,88 kg/l en phase solide). Aussi, 5kg de matériau 21 à changement de phase selon ledit exemple passe de 7L en phase liquide à 6L en phase solide. L'enceinte 20 englobant le matériau 21 à changement de phase doit donc pouvoir encaisser une variation de volume de 1L sans altérer l'efficacité thermique du système ni porter atteinte à l'intégrité de la batterie 1.

En premier lieu, pour ne pas altérer l'efficacité thermique du système, il faut maintenir en permanence le matériau 21 à changement de phase en contact avec les deux surfaces d'échange thermique 22 et 23, respectivement côté module 12 de la batterie 1 et côté extérieur de la batterie 1 et ce, malgré le changement de volume du matériau 21 lors du changement de phase. Dit autrement, quelle que soit la phase dans laquelle se trouve le matériau 21 à changement de phase, l'enceinte 20 englobe le matériau 21 en conservant le contact du matériau avec toutes les surfaces d'échange thermique, côté module et côté extérieur.

Pour ce faire, l'enceinte 20 est munie à son extrémité distale 24 d'un vase d'expansion 200 apte à absorber les dilatations du matériau 21 lors de son changement de phase. Le vase d'expansion 200 est surélevé par rapport à l'enceinte 20 et présente un volume interne qui s'étend sensiblement perpendiculairement au volume d'échange thermique de l'enceinte 20, qui s'étend quant à lui sensiblement horizontalement en regard de la face inférieure de la batterie 1 en englobant le matériau 21 à changement de phase. Plus précisément, le volume interne du vase d'expansion 200 prolonge le volume d'échange thermique de l'enceinte 20 depuis une extrémité inférieure 201 du vase 200 vers une extrémité supérieure 202 fermée, opposée à ladite extrémité inférieure 201.

Dans cette configuration, le vase d'expansion 200 est dimensionné afin d'une part, qu'en phase solide, le matériau 21 remplisse intégralement le volume d'échange thermique délimité par les parois supérieure 22 et inférieure 23 de l'enceinte 20, sans remplir le volume interne du vase d'expansion 200, ou du moins en ne le remplissant que partiellement jusqu'à un premier niveau 203, dit bas et, d'autre part, qu'en phase liquide, le matériau 21 puisse se dilater en remplissant le volume interne du vase d'expansion 200 jusqu'à un second niveau 204, dit haut, sans toutefois que le matériau 21 ne puisse atteindre l'extrémité supérieure 202 du vase 200 lorsqu'il est en phase liquide. De la sorte, le matériau 21, qu'il soit en phase liquide et en phase solide, est toujours en contact avec l'intégralité des surfaces d'échange thermique des parois supérieure 22 et inférieure 23 de l'enceinte 20, respectivement côté modules 12 de la batterie 1 et côté extérieur de la batterie 1.

Par ailleurs, l'intérieur du vase d'expansion 200 communique avec l'extérieur par une canalisation 205 ouverte à l'air ambiant, agencée dans la partie haute du vase d'expansion 200, sensiblement à proximité de l'extrémité haute fermée 202 du vase d'expansion 200. Cette mise à l'air ambiant réalisée dans la partie haute du vase 200 permet avantageusement d'équilibrer les pressions engendrées par le changement de volume du matériau 21 à changement de phase. Cet équilibre des pressions empêche de perturber le changement de phase du matériau 21 sensible à la pression et assure ainsi une bonne efficacité thermique du système. En outre, l'équilibre des pressions empêche la création de contraintes trop importantes au niveau des parois supérieure 22 et inférieure 23 et prévient donc toute atteinte à l'intégrité de la batterie.

La canalisation 205 ouverte à l'air ambiant peut avantageusement être reliée à un conduit 206 apte à surélever la mise à l'air ambiant. En particulier, ce conduit 206 peut être envisagé afin de relever la mise à l'air ambiant à une hauteur suffisante pour empêcher la fuite du matériau 21 à changement de phase sous les effets d'inclinaison et d'accélération du véhicule.

La figure 2 illustre l'évolution en fonction du temps (en minutes) des courbes de températures C1 et C2 respectivement des cellules 11 de la batterie 1 et du matériau 21 à changement de phase, lors de l'utilisation du véhicule impliquant la fourniture de puissance électrique par la batterie et donc, production de chaleur. Comme il apparaît sur la figure 2, tant que la température au niveau du contact entre les cellules et l'enveloppe métallique 10 de la batterie 1 constituant la paroi supérieure 22 de l'enceinte 20 englobant le matériau 21 à changement de phase est inférieure à la température de fusion du matériau 21 à changement de phase, le transfert de chaleur des cellules 11 vers le matériau 21 à changement de phase se fera par chaleur sensible, donc la température du matériau 21 à changement de phase va augmenter, tout en restant inférieure à la température des cellules 11. Par contre, une fois la température de fusion du matériau 21 à changement de phase atteinte, ce dernier va subir un changement de phase de phase solide à phase liquide (début de la fusion du matériau), à température constante. C'est ce changement phase qui constitue l'essentiel de la capacité d'absorption de chaleur par le matériau 21 à changement de phase. Si la totalité du matériau 21 à changement de phase est fondue, alors la température du matériau 21 à changement de phase va croître à nouveau. Si la température des cellules 11 atteint un seuil haut de température S correspondant à la température de « derating » alors il faudra procéder au « derating » de la batterie, soit à une limitation de la puissance demandée à la batterie, de façon à réduire la chaleur générée.

Comme illustré à la figure 3, lorsque la batterie n'est plus utilisée, le transfert de chaleur des cellules 11 de la batterie vers le matériau 21 à changement de phase n'ayant plus lieu, le changement de phase s'opère dans le sens inverse et le matériau 21 va alors subir un changement de phase de phase liquide à phase solide (début de la solidification du matériau) avec le transfert de chaleur cette fois-ci du matériau 21 vers les cellules 11 de la batterie 1 et vers l'extérieur de la batterie 1, soit le milieu ambiant. Ceci permet au matériau 21 à changement de phase de se régénérer, en même temps que de limiter la baisse de la température des cellules 11 en ambiance froide. En effet, dans ce cas de figure, la chaleur latente accumulée par le matériau 21 à changement de phase pendant le fonctionnement du véhicule va se transmettre aux cellules 11 de la batterie 1 durant la non utilisation du véhicule, en contribuant ainsi à maintenir la batterie 1 dans la bonne plage de température.

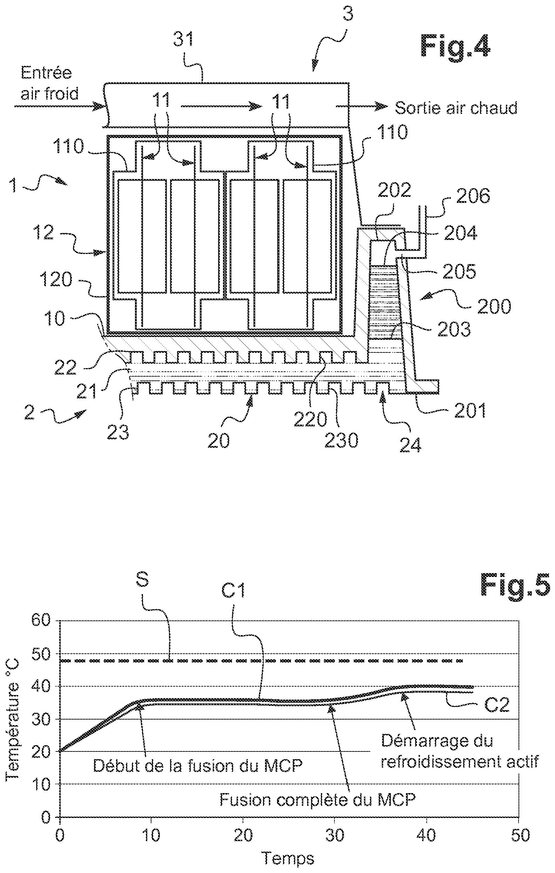

La figure 4 illustre un mode de réalisation dans lequel un système de refroidissement actif 3, de préférence un circuit de refroidissement par air 31, est associé aux moyens de stockage thermique 2 décrits précédemment, mettant en oeuvre un refroidissement passif de la batterie en utilisant la chaleur latente de fusion d'un matériau à changement de phase pour réguler la température de la batterie. Selon ce mode de réalisation, la chaleur produite par les cellules 11 est transmise non seulement aux moyens de stockage thermique 2, comme expliqué précédemment en référence à la figure 1, mais également au fluide de refroidissement (air) mis en oeuvre par le système de refroidissement actif 3. Nous ne détaillerons pas ici le circuit de refroidissement par air 31, qui est bien connu de l'état de l'art. Typiquement, un moto-ventilateur, implanté au niveau de la batterie et alimenté par le réseau électrique du véhicule, crée un flux d'air qui traverse la batterie et s'évacue par des orifices prévus à cet effet. Lors de la traversée de la batterie, la température de l'air augmente en raison de la chaleur cédée par les cellules de la batterie, par convection.

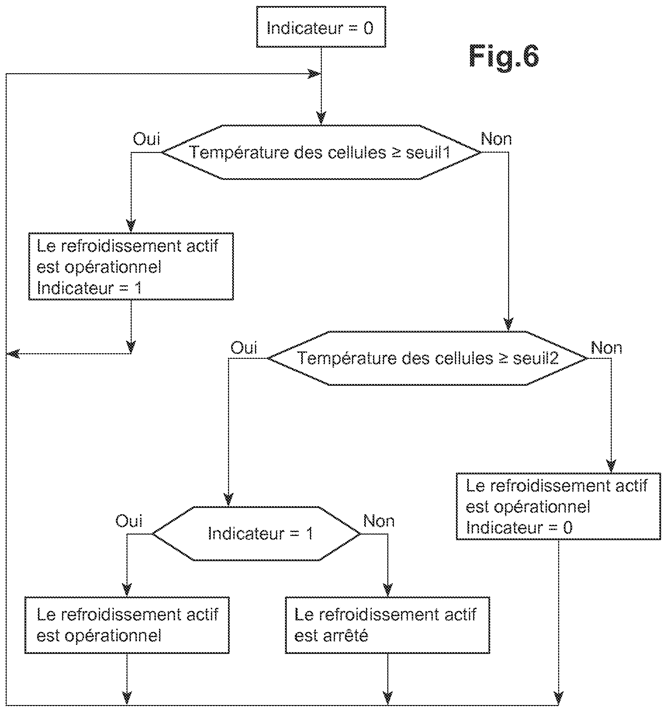

Avec cette configuration associant un système de refroidissement actif 3 aux moyens de stockage thermique 2, un pilotage avantageux de la régulation thermique de la batterie 1 peut être mis en oeuvre, illustré en référence à la figure 5 décrivant, dans cette configuration, l'évolution des courbes de températures C1 et C2 respectivement des cellules 11 de la batterie 1 et du matériau 21 à changement de phase, lorsque la batterie est en fonctionnement. Comme dans le cas précédent, la température des cellules 11 est stabilisée à la température de fusion du matériau 21 à changement de phase tant que le matériau 21 n'a pas entièrement changé de phase. Après la fusion complète du matériau 21 à changement de phase, la température des cellules 11 et celle du matériau 21 à changement de phase vont croître. A l'atteinte d'un premier seuil de température des cellules (seuil1), de préférence 40°C, inférieur au seuil haut de température S correspondant à la température de « derating », le système de refroidissement actif 3 est activé par le superviseur de la batterie BMS (Battery management system), qui est présent de façon connu dans les véhicules électriques et qui surveille notamment la température de la batterie. A l'atteinte d'un deuxième seuil de température des cellules (seuil2), inférieur au premier seuil et de préférence égal à 38°C, le système de refroidissement actif 3 est arrêté jusqu'à ce que la température des cellules atteigne à nouveau le premier seuil (seuil1). Notons que de façon connue, le BMS dispose déjà de la température des cellules grâce à des capteurs de température. L'organigramme de la figure 6 illustre le pilotage des moyens de refroidissement actif pour la régulation thermique de la batterie, qui vient d'être décrit.

Cette façon de piloter le système de refroidissement actif présente plusieurs avantages :
- La température des cellules restant inférieure à la température de « derating », les performances du véhicule ne sont pas dégradées.
- La température des cellules étant maintenue en dessous du premier seuil, préférentiellement 40°C, la durée de vie de la batterie n'est pas dégradée.
- La consommation des moyens de refroidissement actif est réduite au juste nécessaire. En effet, on maintient la température de la batterie entre les premier et deuxième seuils de température, mais on ne cherche pas à descendre plus bas, ce qui aurait augmenté sensiblement la consommation, notamment parce qu'on déstockerait la chaleur stockée dans le matériau à changement de phase.

Comme dans le mode de réalisation précédent sans refroidissement actif, lorsque le véhicule n'est plus utilisé, le changement de phase du matériau à changement de phase s'opère dans le sens inverse, i.e. de la phase liquide vers la phase solide, avec un transfert de la chaleur stockée dans le matériau à changement de phase vers les cellules de la batterie et vers le milieu ambiant, permettant au matériau à changement de phase de se régénérer comme dans le cas précédent.

Dans le mode de réalisation associant le système de refroidissement actif aux moyens de stockage thermique incluant le matériau à changement de phase, le mode opératoire pour le pilotage système de refroidissement actif pourrait être avantageusement modifié de façon à abaisser la température des cellules et donc celle du matériau à changement de phase pendant que le véhicule est connecté à une borne de recharge de la batterie. Typiquement, le système de refroidissement actif sera activé pour abaisser la température des cellules et celle du matériau à changement de phase sensiblement à la température ambiante. Ceci a pour avantage de repartir avec un matériau à changement de phase totalement régénéré. La consommation liée au système de refroidissement actif qui en découle n'affecte pas l'autonomie du véhicule puisque l'énergie électrique provient non pas de la batterie mais de la borne de recharge.

## Revendications

1. Dispositif de gestion thermique d'une batterie (1) d'accumulateurs électriques (11) assemblés au sein d'une enveloppe rigide (10), ledit dispositif comprenant des moyens de stockage thermique (2) intégrés à ladite batterie (1) comprenant une enceinte (20) contenant un matériau (21) à changement de phase et présentant un volume d'échange thermique avec lesdits accumulateurs (11) délimité par au moins une partie de ladite enveloppe (10), la fusion du matériau (21) à changement de phase étant propre à stocker de la chaleur, et la solidification du matériau à changement de phase étant propre à libérer la chaleur préalablement stockée, **caractérisé en ce que** ladite enceinte (20) est munie à son extrémité distale (24) d'un vase d'expansion (200) apte à absorber les dilatations dudit matériau (21) à changement de phase lors de son changement de phase.

2. Dispositif selon la revendication 1, **caractérisé en ce que** ledit vase d'expansion (200) est surélevé par rapport à ladite enceinte (20) et présente un volume interne prolongeant ledit volume d'échange thermique de ladite enceinte (20) depuis une extrémité inférieure (201) dudit vase d'expansion (200) vers une extrémité supérieure (202) fermée dudit vase d'expansion (200), opposée à ladite extrémité inférieure (201).

3. Dispositif selon l'une quelconque des revendications 1 ou 2, **caractérisé en ce que** l'intérieur dudit vase d'expansion (200) est en communication avec l'extérieur par l'intermédiaire d'une canalisation (205) ouverte à l'air ambiant agencée dans une partie haute dudit vase d'expansion (200).

4. Dispositif selon la revendication 3, **caractérisé en ce que** ladite canalisation (205) ouverte à l'air ambiant est reliée à un conduit (206) apte à surélever la mise à l'air ambiant.

5. Dispositif selon l'une quelconque des revendications précédentes, **caractérisé en ce que** ladite enceinte (20) comprend une paroi supérieure (22) en un matériau conducteur de la chaleur constituée par ladite au moins une partie de ladite enveloppe (10) et formant une première surface d'échange thermique avec lesdits accumulateurs (11) et une paroi inférieure (23) en un matériau conducteur de la chaleur, disposée en regard de ladite paroi supérieure (22) de sorte à fermer ledit volume d'échange thermique, ladite paroi inférieure (23) formant une deuxième surface d'échange thermique avec l'extérieur de ladite batterie (1).

6. Dispositif selon la revendication 5, **caractérisé en ce que** ladite enceinte (20) comporte des ailettes d'échange thermique (220, 230) intégrées sur les surfaces desdites parois supérieure (22) et inférieure (23) de ladite enceinte (20).

7. Dispositif selon l'une quelconque des revendications précédentes, **caractérisé en ce qu'**il comprend un système de refroidissement actif (3) comportant un circuit de refroidissement (31) implanté dans ladite batterie (1) doté de moyens de circulation d'un fluide de refroidissement à travers ladite batterie (1).

8. Dispositif selon la revendication 7, **caractérisé en ce qu'**il comprend des moyens de commande dudit système de refroidissement actif aptes à commander l'activation dudit système de refroidissement actif (3) lorsque la température desdits accumulateurs (11) atteint un premier seuil de température (seuil1) supérieur à la température de fusion dudit matériau (21) à changement de phase et aptes à commander l'arrêt dudit système de refroidissement actif (3) lorsque la température desdits accumulateurs (11) atteint un deuxième seuil de température (seuil2) compris entre la température de fusion dudit matériau (21) à changement de phase et ledit premier seuil (seuil1).

9. Dispositif selon l'une quelconque des revendications précédentes, **caractérisé en ce que** la température de fusion dudit matériau (21) à changement de phase est sensiblement de l'ordre de 35°C.

10. Dispositif selon l'une quelconque des revendications précédentes, **caractérisé en ce que** ledit matériau (21) à changement de phase est de type paraffine.

## Patentansprüche

1. Thermische Steuervorrichtung einer Batterie (1) von elektrischen Akkumulatoren (11), die in einem starren Gehäuse (10) zusammengefügt sind, wobei die Vorrichtung Wärmespeichermittel (2) aufweist, die in der Batterie (1) integriert sind, umfassend einen Behälter (20), der ein Phasenänderungsmaterial (21) enthält und ein Volumen für den Wärmeaustausch mit den Akkumulatoren (11) aufweist, das durch mindestens einen Teil von dem Gehäuse (10) begrenzt ist, wobei das Schmelzen des Phasenänderungsmaterials (21) geeignet ist, Wärme zu speichern, und das Verfestigen des Phasenänderungsmaterials geeignet ist, die zuvor gespeicherte Wärme freizusetzen, **dadurch gekennzeichnet, dass** der Behälter (20) an seinem distalen Ende (24) mit einem Ausdehnungsgefäß (200) versehen ist, das geeignet ist, die Ausdehnungen des Phasenänderungsmaterials (21) während seiner Phasenänderung zu absorbieren.

2. Vorrichtung nach Anspruch 1, **dadurch gekennzeichnet, dass** das Ausdehnungsgefäß (200) gegenüber dem Behälter (20) überhöht ist und ein Innenvolumen aufweist, das das Wärmeaustauschvolumen des Behälters (20) von einem unteren Ende (201) des Ausdehnungsgefäßes (200) in Richtung eines geschlossenen oberen Endes (202) des Ausdehnungsgefäßes (200) verlängert, das dem unteren Ende (201) gegenüberliegt.

3. Vorrichtung nach einem der Ansprüche 1 oder 2, **dadurch gekennzeichnet, dass** das Innere des Ausdehnungsgefäßes (200) über einen Kanal (205), der gegenüber der Umgebungsluft offen ist, der in einem oberen Teil des Ausdehnungsgefäßes (200) angeordnet ist, in Verbindung mit dem Äußeren steht.

4. Vorrichtung nach Anspruch 3, **dadurch gekennzeichnet, dass** der Kanal (205), der gegenüber der Umgebungsluft offen ist, mit einer Leitung (206) verbunden ist, die geeignet ist, das Bringen an die Umgebungsluft höher zu legen.

5. Vorrichtung nach einem der vorhergehenden Ansprüche, **dadurch gekennzeichnet, dass** der Behälter (20) eine obere Wand (22) aus einem wärmeleitenden Material, die durch den mindestens einen Teil des Gehäuses (10) gebildet ist und eine erste Wärmeaustauschfläche mit den Akkumulatoren (11) bildet, und eine untere Wand (23) aus einem wärmeleitenden Material aufweist, die gegenüber der oberen Wand (22) derart angeordnet ist, um das Wärmeaustauschvolumen zu schließen, wobei die untere Wand (23) eine zweite Wärmeaustauschfläche mit der Außenseite der Batterie (1) bildet.

6. Vorrichtung nach Anspruch 5, **dadurch gekennzeichnet, dass** der Behälter (20) Wärmeaustauschflügel (220, 230) aufweist, die auf den Flächen der oberen (22) und unteren (23) Wand des Behälters (20) integriert sind.

7. Vorrichtung nach einem der vorhergehenden Ansprüche, **dadurch gekennzeichnet, dass** sie ein aktives Kühlsystem (3) aufweist, das einen Kühlkreislauf (31) aufweist, der in der Batterie (1) eingesetzt ist, der mit Mitteln zum Zirkulieren von einer Kühlflüssigkeit durch die Batterie (1) versehen ist.

8. Vorrichtung nach Anspruch 7, **dadurch gekennzeichnet, dass** sie Mittel zum Steuern des aktiven Kühlsystems aufweist, die geeignet sind, das Aktivieren des aktiven Kühlsystems (3) zu steuern, wenn die Temperatur der Akkumulatoren (11) einen ersten Temperaturschwellenwert (seuil1) erreicht, der höher als die Schmelztemperatur des Phasenänderungsmaterials (21) ist, und die geeignet sind, das Anhalten des aktiven Kühlsystems (3) zu steuern, wenn die Temperatur der Akkumulatoren (11) einen zweiten Temperaturschwellenwert (seuil2) erreicht, der zwischen der Schmelztemperatur des Phasenänderungsmaterials (21) und dem ersten Schwellenwert (seuil1) liegt.

9. Vorrichtung nach einem der vorhergehenden Ansprüche, **dadurch gekennzeichnet, dass** die Schmelztemperatur des Phasenänderungsmaterials (21) im Wesentlichen etwa 35 °C beträgt.

10. Vorrichtung nach einem der vorhergehenden Ansprüche, **dadurch gekennzeichnet, dass** das Phasenänderungsmaterial (21) vom Typ des Paraffins ist.

## Claims

1. Device for the thermal management of a battery (1) of electric accumulators (11) assembled within a rigid casing (10), said device comprising thermal storage means (2) integrated into said battery (1) comprising a chamber (20) containing a phase-change material (21) and having a volume for exchange of heat with said accumulators (11) which is delimited by at least part of said casing (10), the melting of the phase-change material (21) being able to store heat, and the solidification of the phase-change material being able to release the heat previously stored, **characterized in that** said chamber (20) is equipped at its distal end (24) with an expansion vessel (200) able to absorb the expansions of said phase-change material (21) as it changes phase.

2. Device according to Claim 1, **characterized in that** said expansion vessel (200) is raised relative to said chamber (20) and has an internal volume extending said heat exchange volume of said chamber (20) from a lower end (201) of said expansion vessel (200) to an upper closed end (202) of said expansion vessel (200), which is opposite said lower end (201).

3. Device according to either one of Claims 1 and 2, **characterized in that** the interior of said expansion vessel (200) is in communication with the exterior by means of a channeling (205) open to the ambient air, said channeling being arranged in an upper part of said expansion vessel (200).

4. Device according to Claim 3, **characterized in that** said channeling (205) open to the ambient air is connected to a conduit (206) able to raise the connection to the ambient air.

5. Device according to any one of the preceding claims, **characterized in that** said chamber (20) comprises an upper wall (22) made of a heat-conducting material formed by said at least one part of said casing (10) and forming a first surface for exchange of heat with said accumulators (11) and a lower wall (23) made of a heat-conducting material, disposed opposite said upper wall (22) so as to close said heat exchange volume, said lower wall (23) forming a second surface for exchange of heat with the exterior of said battery (1) .

6. Device according to Claim 5, **characterized in that** said chamber (20) comprises heat exchange fins (220, 230) integrated on the surfaces of said upper (22) and lower (23) walls of said chamber (20).

7. Device according to any one of the preceding claims, **characterized in that** it comprises an active cooling system (3), comprising a cooling circuit (31) installed in said battery (1), equipped with means for circulating a cooling fluid through said battery (1).

8. Device according to Claim 7, **characterized in that** it comprises control means of said active cooling system able to control the activation of said active cooling system (3) when the temperature of said accumulators (11) reaches a first temperature threshold (threshold1) greater than the melting point of said phase-change material (21) and able to control the stopping of said active cooling system (3) when the temperature of said accumulators (11) reaches a second temperature threshold (threshold2) comprised between the melting point of said phase-change material (21) and said first threshold (threshold1).

9. Device according to any one of the preceding claims, **characterized in that** the melting point of said phase-change material (21) is substantially approximately 35°C.

10. Device according to any one of the preceding claims, **characterized in that** said phase-change material (21) is of the paraffin type.
